# EUROPEAN PATENT SPECIFICATION

(11) **EP 4 669 950 B1**
(45) Date of publication and mention of the grant of the patent: **02.12.2026**
(21) Application number: 24703669.2
(22) Date of filing: 05.02.2024
(51) Int. Cl.: G01N 11/14

(54) **AN APPARATUS ARRANGED FOR MEASURING A RHEOLOGICAL PROPERTY AND A METHOD FOR MEASURING A RHEOLOGICAL PROPERTY**
VORRICHTUNG ZUR MESSUNG EINER RHEOLOGISCHEN EIGENSCHAFT UND VERFAHREN ZUR MESSUNG EINER RHEOLOGISCHEN EIGENSCHAFT
APPAREIL AGENCÉ POUR MESURER UNE PROPRIÉTÉ RHÉOLOGIQUE ET PROCÉDÉ DE MESURE D'UNE PROPRIÉTÉ RHÉOLOGIQUE

(30) Priority: 20.02.2023 NL 2034185
(43) Date of publication of application: 31.12.2025
(73) Proprietor: Technische Universiteit Eindhoven, 5612 AE Eindhoven (NL)
(72) Inventor: VAN DER GRACHT, Coen Rinus Carel, 5612 AE Eindhoven (NL); CARDINAELS, Ruth Maria, 5612 AE Eindhoven (NL); JAENSSON, Nick Olov, 5612 AE Eindhoven (NL)
(74) Representative: Algemeen Octrooi- en Merkenbureau B.V.
(86) International application number: PCT/NL2024/050054
(87) International publication number: WO 2024/177500

(56) References cited:
- WO-A1-2006/110963
- US-A1- 2014 007 658

## Description

According to a first aspect, the present disclosure relates to an apparatus arranged for measuring a rheological property such as viscosity of a fluid such as a liquid, suspension, gel or slurry, preferably for measuring a plurality of the rheological properties and surface tension of the fluid.

According to a second aspect, the present disclosure relates to a method for measuring a rheological property such as viscosity of a fluid such as a liquid, suspension, gel or slurry.

When rheological properties need to be measured a rheometer usually is used. A rheometer is a laboratory device used to measure the way in which a dense fluid (a liquid, suspension or slurry) flows in response to applied forces. It is used for those fluids which cannot be defined by a single value of viscosity and therefore require more parameters to be set and measured than is the case for a viscometer. It measures the rheology of the fluid.

There are different types of rheometers known. Rheometers that control the applied shear stress or shear strain are called shear rheometers, whereas rheometers that apply extensional stress or extensional strain are extensional rheometers. The most frequently used shear type rheometers are rotational rheometers. They are usually designed as either a native strain-controlled instrument (control and apply a user-defined shear strain which can then measure the resulting shear stress) or a native stress-controlled instrument (control and apply a user-defined shear stress and measure the resulting shear strain).

The disadvantage of a rheometer is that the measurement itself is complex and it takes quite some time and specific knowledge to interpret the results from this machine.

The rheometer requires manipulation of the test sample and cannot be implemented inline. The most common machine used for measuring surface tension is the pendant drop machine. To use this machine also some specific knowledge is needed to perform the experiment and convert the result to the surface tension.

The apparatus at least partly overcomes one of the mentioned disadvantages since the apparatus according to the present disclosure comprises:
- a container comprising a receiving space arranged for holding the fluid, wherein the container is provided with a bottom wall and a side wall;
- a rotation unit provided near the bottom wall of the container, preferably at the bottom of the container, and provided with a rotation organ, wherein the rotation organ is arranged for rotation in the receiving space relative to the container at a predetermined rotation speed, a predetermined angle of rotation and/or torque for providing a rotational force to the fluid;
- a detection unit arranged for detecting a surface deformation of the fluid, due to rotation of the rotation organ;
- a reference register comprising reference data related to surface deformations of respective fluids, preferably due to rotation of the rotation organ at the predetermined rotation speed, the predetermined angle of rotation and/or torque, and related to known rheological properties of the respective fluids;
- a determining unit arranged for:
   - receiving the detected surface deformation from the detection unit;
   - accessing the reference data of the reference register;
   - determining respective correlations between the detected surface deformation, and the surface deformations of the respective fluids from the accessed reference data; and
   - identifying a fluid of the respective fluids of the reference data based on a maximum correlation among the determined respective correlations; and
   - an output unit arranged for outputting the rheological property respectively corresponding with the fluid identified by the determining unit.

The apparatus according to the present disclosure is arranged to apply a rotation force to the fluid by rotation of the rotation organ thereby causing a deformation of the surface of a liquid with unknown material properties. This deformation of the surface will be monitored over time and compared with numerical simulations that mimic the same deformation. When this simulation and measurements of the deformed surface match, a good estimation of the material properties can be made.

The rotation of the rotating organ will generate normal stresses, which arise from the viscoelastic properties of the fluid. The sensing of rheological properties for example could be useful in any liquid production process such as food, healthcare, pharma paint, coatings and gasoline production processes. In order to produce a consistent end product measuring and controlling the rheological properties and interfacial properties may be essential.

Viscoelastic materials show both elastic and viscous behaviour. A well-documented phenomenon caused by the elastic properties of viscoelastic fluids is called the Weissenberg effect. This effect is probed by the rotating disk and will introduce normal stresses in viscoelastic fluids. The effect of these stresses can be seen when a disk at the bottom of the sample holder is rotated. The visible effect is that the fluid above this rotating disk climbs up. This deformation of the surface can be measured with a 2D laser sensor. This deformation of the surface will be monitored over time and compared with numerical simulations that mimic the same deformation. When this simulation and measurements of the deformed surface match, a good estimation of the viscoelastic material properties can be made.

In an embodiment, the rotation unit is arranged for rotating the rotation organ about a first rotation axis, wherein the first rotation axis is substantially perpendicular, preferable perpendicular to a side of the bottom wall facing the receiving space. This is beneficial for realizing a relative accurate measurement of the rheological property.

Preferably, the rotation organ is spaced apart at a predetermined distance from the bottom wall, wherein the apparatus is provided with a sealing arrangement arranged for providing a fluid tight seal between the bottom wall and the rotation axis. This is beneficial for realizing a relative accurate measurement of the rheological property.

In an embodiment, the rotation organ is a disc shape element, preferably a round element. This is beneficial for realizing a relative accurate measurement of the rheological property.

In an embodiment, the rotation organ comprises a magnetic material and the rotation unit comprises a device for providing a rotating magnetic field near the bottom wall of the container for rotating the rotation organ.

In this regard it is beneficial if the rotation organ is a rod shaped element which are known to the skilled person in the art. Preferably, the rod shaped element comprises a magnetic material.

Alternatively, the rotation organ may comprise one or more magnetic balls that are movable in the fluid due to the rotating magnetic field.

In a practical embodiment of the apparatus according to the present disclosure, the side wall has a curved shaped such that the receiving space is cylindrical. This is beneficial for realizing a relative accurate measurement of the rheological property.

Preferably, the detection unit comprises a detector, preferably a laser sensor, more preferably a 2D surface laser sensor. This is beneficial for realizing a relative accurate measurement of the rheological property. Alternatively, or in addition to the laser sensor, the detection unit comprises a sonar unit.

Preferably, the detection unit comprises a radiation device arranged for emitting electromagnetic radiation at a predetermined wavelength range or at a predetermined wavelength.

In this regard, it is beneficial if the detector, preferably the laser sensor, more preferably the 2D surface laser sensor, is arranged for detecting electromagnetic radiation emitted by the radiation device.

Preferably, the detection unit is provided above the container such that the detection unit, or at least the detector thereof, is directed towards the bottom wall of the container. In other words, the viewing direction of the detector is directed to, preferably perpendicular to, the bottom wall of the container. This is beneficial for allowing the detector to view the surface of the fluid from above. This is beneficial for realizing a relative accurate measurement of the rheological property.

Preferably, the radiation device is arranged for emitting the electromagnetic radiation in a direction that is substantially parallel to the first rotation axis. This is beneficial for allowing the detector to view the surface of the fluid from above. This is beneficial for realizing a relative accurate measurement of the rheological property.

In another embodiment, the reference data, comprised by the reference register, is at least partly related to surface deformations of respective fluids, detected by the detection unit, and related to rheological properties of the respective fluids, determined by the determining unit. This is beneficial for realizing a relative accurate measurement of the rheological property.

In yet another embodiment, the reference data, comprised by the reference register, is at least partly related to computer simulations of surface deformations of respective fluids having known rheological properties. This is beneficial for realizing a relative accurate measurement of the rheological property.

The apparatus may be arranged for measuring at least one of a viscosity of the fluid, a surface tension of the fluid, a yield stress of the fluid or viscoelasticity properties of the fluid, wherein the reference register comprises reference data related to at least one of a viscosity of the fluid, a surface tension of the fluid, a yield stress of the fluid and viscoelasticity properties of the fluid such as the first normal stress coefficient.

In an embodiment, the detection unit is further arranged for detecting a time dependent surface deformation, due to the rotation of the rotation organ. This is beneficial for realizing a relative accurate measurement of the surface tension of the fluid.

Preferably, the reference data, comprised by the reference register, is at least partly related to maximum surface deformations of respective fluids and related to known rheological properties of the respective fluids and wherein the determining unit is further arranged for:
- determining a maximum surface deformation over time of the time dependent surface deformation; and
- determining respective correlations between the detected maximum surface deformation, and the maximum surface deformations of the respective fluids from the accessed reference data. This is beneficial for realizing a relative accurate measurement of the viscosity of the fluid.

In another preferred embodiment, the reference data, comprised by the reference register, is at least partly related to time dependent surface deformations of respective fluids and related to known rheological properties of the respective fluids and wherein the determining unit is further arranged for:
- determining a gradient of the time dependent surface deformation; and
- determining respective correlations between the gradient of the time dependent surface deformation, and the time dependent surface deformations of the respective fluids from the accessed reference data. This is beneficial for realizing a relative accurate measurement of the viscosity of the fluid.

In an embodiment, the apparatus further comprises a pressure unit arranged for providing a quantity of a gas, preferably air, at a predetermined pressure to a surface of the fluid. By providing the pressure unit an air puff may be exerted onto the surface of the liquid with the unknown material properties. The surface of this liquid will deform due to the exerted pressure. The pressure unit may be arranged for providing the quantity of gas during rotation of the rotation organ.

In this regard, it is beneficial if the detection unit is further arranged for detecting a surface deformation of the fluid, due to the pressurized gas or a combination of surface deformation of the fluid, due to rotation of the rotation organ and the pressurized gas and wherein the reference register further comprises reference data related to surface deformations of respective fluids due to pressurized gas at the predetermined pressure, and related to known rheological properties of the respective fluids or reference data related to surface deformations of respective fluids due to a combination of rotation of the rotation organ and the pressurized gas at the predetermined pressure, and related to known rheological properties of the respective fluids.

Preferably, the pressure unit is further arranged for providing the quantity of gas at a predetermined flow rate. This is beneficial for realizing a relative accurate measurement of the rheological property.

It is advantageous if the pressure unit comprises a nozzle for providing, via a nozzle opening thereof, the quantity of gas to the surface of the fluid, wherein the apparatus further comprises a positioning unit for positioning the nozzle opening relative to the surface of the fluid at a predetermined distance from the surface of the fluid. This is beneficial for realizing a relative accurate measurement of the rheological property.

Preferably, the nozzle opening defines a predetermined area of providing the quantity of gas to the surface of the fluid. This is beneficial for realizing a relative accurate measurement of the rheological property.

In an embodiment, the detection unit is further arranged for detecting a time dependent surface deformation, due to the pressurized gas or due to a combination of the rotation of the rotation organ and the pressurized gas. This is beneficial for realizing a relative accurate measurement of the surface tension of the fluid.

According to the second aspect, the present disclosure relates to a method for measuring a rheological property such as viscosity of a fluid such as a liquid, suspension, gel or slurry, the method comprising the steps of:
- providing a container comprising a receiving space arranged for holding the fluid, wherein the container is provided with a bottom wall and a side wall;
- providing a rotation unit provided near the bottom wall of the container, preferably at the bottom of the container, and provided with a rotation organ, wherein the rotation organ is arranged for rotation in the receiving space relative to the container at a predetermined rotation speed, a predetermined angle of rotation and/or torque for providing a rotational force to the fluid;
- providing the fluid in the receiving space such that the rotation unit, or at least the rotation organ thereof, is below a surface level of the fluid;
- providing, by the rotation unit, the rotational force to the fluid by rotating the rotation organ at the predetermined speed;
- detecting, by a detection unit, a surface deformation of the fluid, due to the rotation of the rotation organ;
- providing, a reference register comprising reference data related to surface deformations of respective fluids, preferably due to rotation of the rotation organ at the predetermined speed, and related to known rheological properties of the respective fluids;
- receiving, by a determining unit, the detected surface deformation from the detection unit;
- accessing, by the determining unit, the reference data of the reference register;
- determining, by the determining unit, respective correlations between the detected surface deformation, and the surface deformations of the respective fluids from the accessed reference data;
- identifying, by the determining unit, a fluid of the respective fluids of the reference data based on a maximum correlation among the determined respective correlations; and
- outputting, by an output unit, the rheological property respectively corresponding with the fluid identified by the determining unit.

Embodiments of the method according to the second aspect correspond to embodiments of the apparatus according to the first aspect of the present disclosure. The advantages of the method according to the second aspect correspond to advantages of the apparatus according to the first aspect of the present disclosure presented previously.

In an embodiment of the method the reference data, comprised by the reference register, is at least partly related to maximum surface deformations of respective fluids and related to known rheological properties of the respective fluids and wherein the method further comprises the steps of:
- determining, by the determining unit, a maximum surface deformation of a time dependent surface deformation; and
- determining, by the determining unit, respective correlations between the detected maximum surface deformation, and the maximum surface deformations of the respective fluids from the accessed reference data.

In another embodiment of the method, the reference data, comprised by the reference register, is at least partly related to time dependent surface deformations of respective fluids and related to known rheological properties of the respective fluids and wherein the method further comprises the steps of:
- determining, by the determining unit, a gradient of the time dependent surface deformation; and
- determining, by the determining unit, respective correlations between the gradient of the time dependent surface deformation, and the time dependent surface deformations of the respective fluids from the accessed reference data.

Preferably, the radiation unit of the detection unit is arranged for emitting radiation that is reflected by the fluid.

In an embodiment, the method further comprises the step of:
- providing , by a pressure unit, a quantity of a gas, preferably air, at a predetermined pressure to a surface of the fluid;

wherein the reference register further comprises reference data related to surface deformations of respective fluids due to pressurized gas at the predetermined pressure, and related to known rheological properties of the respective fluids or reference data related to surface deformations of respective fluids due to a combination of rotation of the rotation organ and the pressurized gas at the predetermined pressure, and related to known rheological properties of the respective fluids;
wherein, during the step of detecting, by the detection unit, a surface deformation of the fluid, due to the pressurized gas or due to a combination of the rotation of the rotation organ and the pressurized gas is detected.

The apparatus and the methods according to the present disclosure will next be explained by means of the accompanying schematic figures. In the figures:
Fig. 1: an embodiment of an apparatus according to the first aspect of the present disclosure is shown;
Fig. 2: another embodiment of an apparatus according to the first aspect of the present disclosure is shown;
Fig. 3: a more detailed view of elements of the apparatus of fig. 2 according to the first aspect of the present disclosure is shown;
Fig. 4: an embodiment of a method according to the second aspect of the present disclosure is shown;
Fig. 5: another embodiment of a method according to the second aspect of the present disclosure is shown.

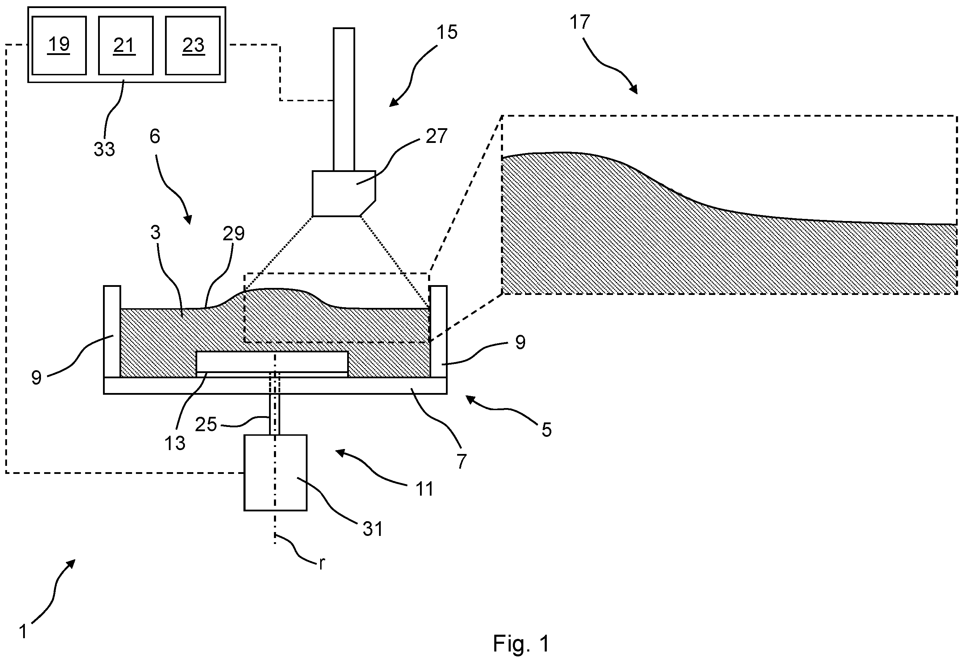

Fig. 1 shows an embodiment of an apparatus 1 according to the first aspect of the present disclosure. The apparatus is arranged for measuring a rheological property of a fluid 3 such as a liquid, suspension, gel or slurry. The rheological property of the fluid 3 is for example a viscosity of the fluid 3, a surface tension of the fluid 3, a yield stress of the fluid 3 or viscoelasticity properties of the fluid 3.

Fig. 1 furthermore shows a distortion of a surface 29 of the fluid 3, by means of introducing normal stresses by rotating a rotation organ 13. This deformation 17 of the fluid surface 29 is monitored over time by a 2D surface laser sensor 27 and compared with numerical simulations that mimic the same deformation. The rotation organ 13 is coupled, via a rotation axis r, to a motor 31. A rotation speed, a predetermined angle of rotation and/or torque of the motor 31 can be controlled and monitored. With the known rotation speed, predetermined angle of rotation and/or torque, all kinds of liquids 3 can be analysed by means of a developed fitting procedure.
The apparatus 1 comprises a container 5, comprising a receiving space 6 arranged for holding the fluid 3. The container 5 is provided with a bottom wall 7 and a side wall 9. The side wall 9 has a curved shaped such that the receiving space 6 is cylindrical. A rotation unit 11 is provided at the bottom wall 7 of the container 5, which rotation unit 11 is provided with a disc shaped rotation organ 13. The rotation organ 13 is spaced apart at a predetermined distance from the bottom wall 7, wherein the apparatus 1
is provided with a sealing arrangement 25 for providing a fluid tight seal between the bottom wall 7 and the rotation axis r.

The rotation unit 11 is arranged for rotating the rotation organ 13 in the receiving space 6 relative to the container 5, about a first rotation axis r, wherein the first rotation axis r is perpendicular to a side of the bottom wall 7 facing the receiving space 6. By rotating the rotation organ 13 at a predetermined rotation speed, predetermined angle of rotation and/or torque by the motor 31, a rotational force is provided to the fluid 3 received in the receiving space 6.

In another embodiment of the apparatus 1, the rotation organ 13 comprises a magnetic material and the rotation unit 11 comprises a device for providing a rotating magnetic field near the bottom wall of the container for rotating the rotation organ 13.

The apparatus 1 furthermore comprises a detection unit 15, comprising the 2D surface laser sensor 27, arranged for detecting the surface deformation 17 of the fluid 3, due to rotation of the rotation organ 13, and arranged for detecting a time dependent surface deformation 17, due to the rotation of the rotation organ 13.

The detection unit 15 and the motor 31 are communicatively coupled to a main controller 33. The main controller 33 comprises a reference register 19, a determining unit 21 and an output unit 23.

The reference register comprises reference data related to surface deformations of respective fluids, due to rotation of the rotation organ 13 at the predetermined rotation speed, the predetermined angle of rotation and/or torque, and related to known rheological properties of the respective fluids.

The determining unit 21 is arranged for receiving the detected surface deformation 17 from the detection unit 15, and arranged for accessing the reference data of the reference register 19, thereby determining respective correlations between the detected surface deformation 17, and the surface deformations of the respective fluids from the accessed reference data, and identifying a fluid of the respective fluids of the reference data based on a maximum correlation among the determined respective correlations.

The reference data, comprised by the reference register 19, is at least partly related to surface deformations of respective fluids, detected by the detection unit 15, related to rheological properties of the respective fluids, determined by the determining unit 21, and at least partly related to computer simulations of surface deformations of respective fluids having known rheological properties.

The output unit 23 is arranged for outputting the rheological property respectively corresponding with the fluid 3 identified by the determining unit 21.

For measuring, by the apparatus 1, the viscosity of the fluid 3, the surface tension of the fluid 3, the yield stress of the fluid 3 and/or the viscoelasticity properties of the fluid 3, the reference register 19 comprises reference data related to at least the viscosity of the fluid 3, the surface tension of the fluid 3, the yield stress of the fluid 3 and the viscoelasticity properties of the fluid 3, respectively.

Additionally, the reference data is at least partly related to maximum surface deformations of respective fluids and related to known rheological properties of the respective fluids. Thereby, the determining unit 21 is further arranged for determining a maximum surface deformation over time of the time dependent surface deformation, and is arranged for determining respective correlations between the detected maximum surface deformation, and the maximum surface deformations of the respective fluids from the accessed reference data.

Furthermore, the reference data is at least partly related to time dependent surface deformations of respective fluids and related to known rheological properties of the respective fluids. Thereby, the determining unit 21 is further arranged for determining a gradient of the time dependent surface deformation, and is arranged for determining respective correlations between the gradient of the time dependent surface deformation, and the time dependent surface deformations of the respective fluids from the accessed reference data.

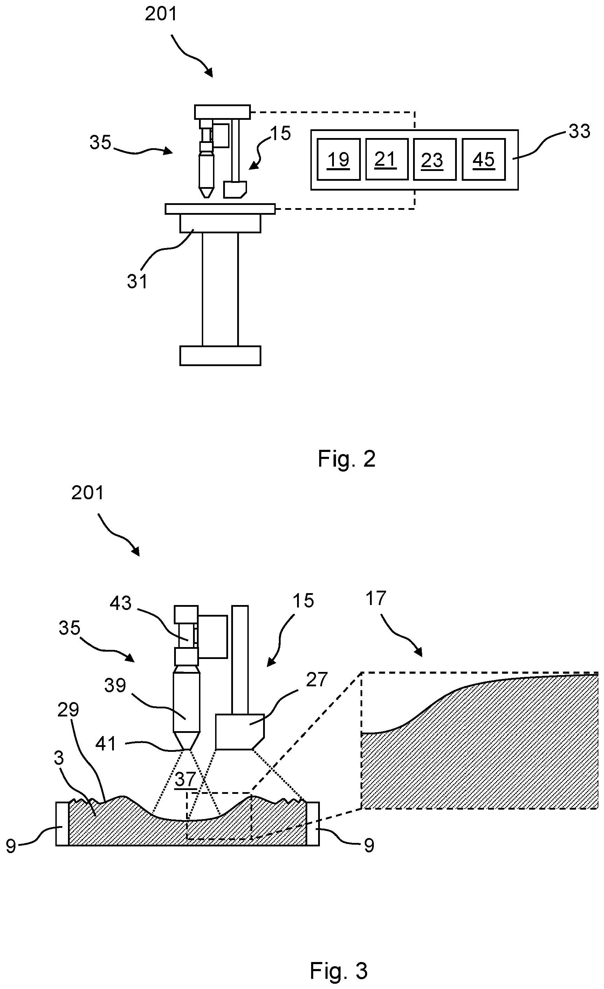

Fig. 2 and 3 show another embodiment of an apparatus 201 according to the first aspect of the present disclosure. The apparatus 201 comprises corresponding elements with regard to the apparatus 1 as described above, wherein corresponding elements are indicated with identical reference numbers.

With regard to the apparatus 1, apparatus 201 furthermore comprises a pressure unit 35 arranged for providing a quantity of a gas 37 at a predetermined pressure to a surface 29 of the fluid 3.

The pressure unit 35 provides the pressurized gas 37, preferably air, with a nozzle 39 having a nozzle opening 41 to the surface 29 of the fluid 3. The pressure unit 35 furthermore comprises a positioning unit 43 for positioning the nozzle opening 41 at a desired and predetermined distance from the surface 29 of the fluid 3. The pressure of the gas 37 that is provided by the pressure unit 35 is controlled with a pressure controller 45.

The surface deformation 17 of the fluid's surface 29, shown on the right of Fig. 3 as a close-up, is detected by the detection unit 15 that comprises the 2D surface laser sensor 27. The detection unit 15 is arranged for detecting a surface deformation 17 of the fluid 3, due to the pressurized gas 37 or a combination of surface deformation 17 of the fluid 3, due to rotation of the rotation organ 13 and the pressurized gas 37. The reference register 19 comprises reference data related to surface deformations of respective fluids due to pressurized gas at the predetermined pressure, and related to known rheological properties of the respective fluids or reference data related to surface deformations of respective fluids due to a combination of rotation of the rotation organ 13 and the pressurized gas 37 at the predetermined pressure, and related to known rheological properties of the respective fluids.

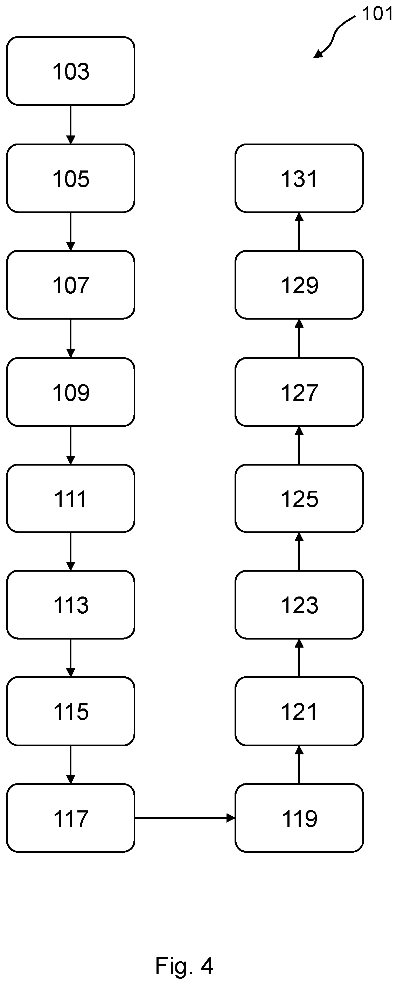

Fig. 4 shows a flow diagram of an embodiment of a method 101 according to the second aspect of the present disclosure. The method 101 is arranged for measuring the rheological property of the fluid 3 using the apparatus 1 as described above.

The method 101 comprises the steps of:
- providing 103 the container 5;
- providing 105 the rotation unit 11 at the bottom wall 7 of the container 5;
- providing 107 the fluid 3 in the receiving space 6 of the container 5 such that the rotation unit 11 is below a surface level 29 of the fluid 3;
- providing 109, by the rotation unit 11, the rotational force to the fluid 3 by rotating the rotation organ 13 at the predetermined speed;
- detecting 111, by the detection unit 15, a surface deformation 17 of the fluid 3, due to the rotation of the rotation organ 13;
- providing 113, a reference register 19 comprising reference data related to surface deformations of respective fluids, preferably due to rotation of the rotation organ 13 at the predetermined speed, and related to known rheological properties of the respective fluids;
- receiving 115, by the determining unit 21, the detected surface deformation from the detection unit 15;
- accessing 117, by the determining unit 21, the reference data of the reference register 19;
- determining 119, by the determining unit 21, respective correlations between the detected surface deformation, and the surface deformations of the respective fluids from the accessed reference data;
- identifying 121, by the determining unit 21, a fluid of the respective fluids of the reference data based on a maximum correlation among the determined respective correlations; and
- outputting 123, by an output unit 23, the rheological property respectively corresponding with the fluid 3 identified by the determining unit.

The method 101 furthermore comprises the steps of:
- determining 125, by the determining unit 17, a maximum surface deformation of a time dependent surface deformation; and
- determining 127, by the determining unit 17, respective correlations between the detected maximum surface deformation, and the maximum surface deformations of the respective fluids from the accessed reference data, wherein the reference data is at least partly related to maximum surface deformations of respective fluids and related to known rheological properties of the respective fluids.

The method 101 furthermore comprises the steps of:
- determining 129, by the determining unit 17, a gradient of the time dependent surface deformation; and
- determining 131, by the determining unit 17, respective correlations between the gradient of the time dependent surface deformation, and the time dependent surface deformations of the respective fluids from the accessed reference data, wherein the reference data is at least partly related to time dependent surface deformations of respective fluids and related to known rheological properties of the respective fluids.

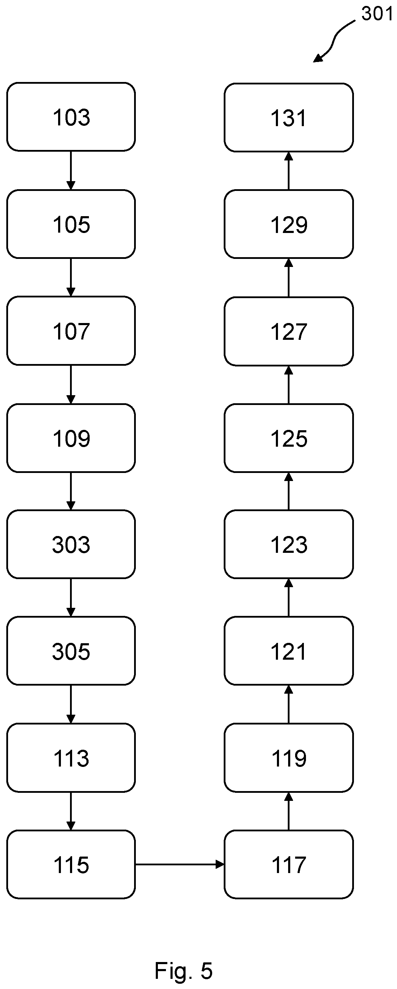

Fig. 5 shows another embodiment of a method 301 according to the second aspect of the present disclosure. The method 301 comprises corresponding steps with regard to the method 101 as described above, wherein corresponding steps are indicated with identical reference numbers.

With regard to the method 101, method 301 furthermore comprises an additional step of providing 301, by the pressure unit 35, a quantity of a gas 37, preferably air, at a predetermined pressure to a surface 29 of the fluid 3.

The reference register 15 further comprises reference data related to surface deformations of respective fluids due to pressurized gas at the predetermined pressure, and related to known rheological properties of the respective fluids or reference data related to surface deformations of respective fluids due to a combination of rotation of the rotation organ 13 and the pressurized gas 37 at the predetermined pressure, and related to known rheological properties of the respective fluids.

During the step of detecting 305, by the detection unit 15, a surface deformation 17 of the fluid, due to the pressurized gas 37 or due to a combination of the rotation of the rotation organ 13 and the pressurized gas 37 is detected.

## Claims

1. An apparatus (1, 201) arranged for measuring a rheological property such as viscosity of a fluid (3) such as a liquid, suspension, gel or slurry, preferably for measuring a plurality of the rheological properties and surface tension of the fluid (3), the apparatus (1) comprising:
- a container (5) comprising a receiving space (6) arranged for holding the fluid (3), wherein the container (5) is provided with a bottom wall (7) and a side wall (9);
- a rotation unit (11) provided near the bottom wall (7) of the container (5), preferably at the bottom (7) of the container (5), and provided with a rotation organ (13), wherein the rotation organ (13) is arranged for rotation in the receiving space (6) relative to the container (5) at a predetermined rotation speed, a predetermined angle of rotation and/or torque for providing a rotational force to the fluid (3);
- a detection unit (15) arranged for detecting a surface deformation (17) of the fluid (3), due to rotation of the rotation organ (13);
- a reference register (19) comprising reference data related to surface deformations of respective fluids, preferably due to rotation of the rotation organ (13) at the predetermined rotation speed, the predetermined angle of rotation and/or torque, and related to known rheological properties of the respective fluids;
- a determining unit (21) arranged for:
- receiving the detected surface deformation (17) from the detection unit (15);
- accessing the reference data of the reference register (19);
- determining respective correlations between the detected surface deformation (17), and the surface deformations of the respective fluids from the accessed reference data; and
- identifying a fluid of the respective fluids of the reference data based on a maximum correlation among the determined respective correlations; and
- an output unit (23) arranged for outputting the rheological property respectively corresponding with the fluid (3) identified by the determining unit (21).

2. The apparatus (1, 201) according to claim 1, wherein the rotation unit (11) is arranged for rotating the rotation organ (13) about a first rotation axis (r), wherein the first rotation axis (r) is substantially perpendicular, preferable perpendicular to a side of the bottom wall (7) facing the receiving space (6).

3. The apparatus (1, 201) according to any one of the preceding claims, wherein the rotation organ (13) is a disc shape element, preferably a round element or a rod-shaped element.

4. The apparatus (1, 201) according to any one of the preceding claims, wherein the rotation organ comprises a magnetic material and the rotation unit comprises a device for providing a rotating magnetic field near the bottom wall of the container for rotating the rotation organ.

5. The apparatus (1, 201) according to any one of the preceding claims, wherein the detection unit (15) comprises a detector (27), preferably a laser sensor (27), more preferably a 2D surface laser sensor.

6. The apparatus (1, 201) according to any one of the preceding claims, wherein the reference data, comprised by the reference register (19), is at least partly related to:
surface deformations of respective fluids, detected by the detection unit (15), and related to rheological properties of the respective fluids, determined by the determining unit (21); and/or
computer simulations of surface deformations of respective fluids having known rheological properties.

7. The apparatus (1, 201) according to any one of the preceding claims, wherein the apparatus (1) is arranged for measuring at least one of a viscosity of the fluid (3), a surface tension of the fluid (3), a yield stress of the fluid (3) or viscoelasticity properties of the fluid (3), wherein the reference register (19) comprises reference data related to at least one of a viscosity of the fluid (3), a surface tension of the fluid (3), a yield stress of the fluid (3) and viscoelasticity properties of the fluid (3).

8. The apparatus (1, 201) according to any one of the preceding claims, wherein the detection unit (15) is further arranged for detecting a time dependent surface deformation, due to the rotation of the rotation organ (13).

9. The apparatus (1, 201) according to claim 8, wherein the reference data, comprised by the reference register (19), is at least partly related to maximum surface deformations of respective fluids and related to known rheological properties of the respective fluids and wherein the determining unit (21) is further arranged for:
- determining a maximum surface deformation over time of the time dependent surface deformation; and
- determining respective correlations between the detected maximum surface deformation, and the maximum surface deformations of the respective fluids from the accessed reference data, and
preferably wherein the reference data, comprised by the reference register (19), is at least partly related to time dependent surface deformations of respective fluids and related to known rheological properties of the respective fluids and wherein the determining unit (21) is further arranged for:
- determining a gradient of the time dependent surface deformation; and
- determining respective correlations between the gradient of the time dependent surface deformation, and the time dependent surface deformations of the respective fluids from the accessed reference data.

10. The apparatus (201) according to any one of the preceding claims, wherein the apparatus (201) further comprises:
- a pressure unit (35) arranged for providing (303) a quantity of a gas (37), preferably air, at a predetermined pressure to a surface (29) of the fluid (3).

11. The apparatus (201) according to claim 10, wherein the detection unit (15) is further arranged for detecting (305) a surface deformation (17) of the fluid (3), due to the pressurized gas (37) or a combination of surface deformation (17) of the fluid (3), due to rotation of the rotation organ (13) and the pressurized gas (37) and wherein the reference register (19) further comprises reference data related to surface deformations of respective fluids due to pressurized gas at the predetermined pressure, and related to known rheological properties of the respective fluids or reference data related to surface deformations of respective fluids due to a combination of rotation of the rotation organ (13) and the pressurized gas (37) at the predetermined pressure, and related to known rheological properties of the respective fluids.

12. A method (101, 301) for measuring a rheological property such as viscosity of a fluid (3) such as a liquid, suspension, gel or slurry, the method (101) comprising the steps of:
- providing (103) a container (5) comprising a receiving space (6) arranged for holding the fluid (3), wherein the container (5) is provided with a bottom wall (7) and a side wall (9);
- providing (105) a rotation unit (11) provided near the bottom wall (7) of the container (5), preferably at the bottom (7) of the container (5), and provided with a rotation organ (13), wherein the rotation organ (13) is arranged for rotation in the receiving space (6) relative to the container (5) at a predetermined rotation speed, the predetermined angle of rotation and/or torque for providing a rotational force to the fluid (3);
- providing (107) the fluid (3) in the receiving space (6) such that the rotation unit (11), or at least the rotation organ (13) thereof, is below a surface level (29) of the fluid (3);
- providing (109), by the rotation unit (11), the rotational force to the fluid (3) by rotating the rotation organ (13) at the predetermined speed;
- detecting (111), by a detection unit (15), a surface deformation (17) of the fluid (3), due to the rotation of the rotation organ (13);
- providing (113), a reference register (19) comprising reference data related to surface deformations of respective fluids, preferably due to rotation of the rotation organ (13) at the predetermined speed, and related to known rheological properties of the respective fluids;
- receiving (115), by a determining unit (21), the detected surface deformation from the detection unit (15);
- accessing (117), by the determining unit (21), the reference data of the reference register (19);
- determining (119), by the determining unit (21), respective correlations between the detected surface deformation, and the surface deformations of the respective fluids from the accessed reference data;
- identifying (121), by the determining unit (21), a fluid of the respective fluids of the reference data based on a maximum correlation among the determined respective correlations; and
- outputting (123), by an output unit (23), the rheological property respectively corresponding with the fluid (3) identified by the determining unit.

13. The method (101, 301) according to claim 12, wherein the reference data, comprised by the reference register (19), is at least partly related to maximum surface deformations of respective fluids and related to known rheological properties of the respective fluids and wherein the method (101) further comprises the steps of:
- determining (125), by the determining unit (21), a maximum surface deformation of a time dependent surface deformation; and
- determining (127), by the determining unit (21), respective correlations between the detected maximum surface deformation, and the maximum surface deformations of the respective fluids from the accessed reference data.

14. The method (101, 301) according to claim 12 or 13, wherein the reference data, comprised by the reference register (19), is at least partly related to time dependent surface deformations of respective fluids and related to known rheological properties of the respective fluids and wherein the method (101) further comprises the steps of:
- determining (129), by the determining unit (21), a gradient of the time dependent surface deformation; and
- determining (131), by the determining unit (21), respective correlations between the gradient of the time dependent surface deformation, and the time dependent surface deformations of the respective fluids from the accessed reference data.

15. The method (301) according to any of the claims 12 to 14, wherein the method (301) further comprises the step of:
- providing (303), by a pressure unit (35), a quantity of a gas (37), preferably air, at a predetermined pressure to a surface (29) of the fluid (3);
wherein the reference register (15) further comprises reference data related to surface deformations of respective fluids due to pressurized gas at the predetermined pressure, and related to known rheological properties of the respective fluids or reference data related to surface deformations of respective fluids due to a combination of rotation of the rotation organ (13) and the pressurized gas (37) at the predetermined pressure, and related to known rheological properties of the respective fluids;
wherein, during the step of detecting (305), by the detection unit (15), a surface deformation (17) of the fluid, due to the pressurized gas (37) or due to a combination of the rotation of the rotation organ (13) and the pressurized gas (37) is detected.

## Patentansprüche

1. Vorrichtung (1, 201), eingerichtet zum Messen einer rheologischen Eigenschaft wie etwa der Viskosität eines Fluids (3) wie etwa die einer Flüssigkeit, einer Suspension, eines Gels oder einer Aufschlämmung, vorzugsweise zum Messen einer Vielzahl der rheologischen Eigenschaften und der Oberflächenspannung des Fluids (3), wobei die Vorrichtung (1) umfasst:
- einen Behälter (5), umfassend einen Aufnahmeraum (6), der zum Halten des Fluids (3) eingerichtet ist, wobei der Behälter (5) mit einer Bodenwand (7) und einer Seitenwand (9) versehen ist;
- eine Rotationseinheit (11), die in der Nähe der Bodenwand (7) des Behälters (5), vorzugsweise am Boden (7) des Behälters (5), vorgesehen ist und mit einem Rotationsorgan (13) versehen ist, wobei das Rotationsorgan (13) zur Drehung in dem Aufnahmeraum (6) relativ zu dem Behälter (5) mit einer vorbestimmten Drehzahl, einem vorbestimmten Drehwinkel und/oder Drehmoment eingerichtet ist, um das Fluid (3) mit einer Rotationskraft zu beaufschlagen;
- eine Erfassungseinheit (15), die zum Erfassen einer Oberflächenverformung (17) des Fluids (3) aufgrund einer Drehung des Rotationsorgans (13) eingerichtet ist;
- ein Referenzregister (19), umfassend Referenzdaten, die sich auf Oberflächenverformungen jeweiliger Fluide beziehen, vorzugsweise aufgrund von einer Drehung des Rotationsorgans (13) bei der vorbestimmten Drehzahl, dem vorbestimmten Drehwinkel und/oder Drehmoment, und die sich auf bekannte rheologische Eigenschaften der jeweiligen Fluide beziehen;
- eine Bestimmungseinheit (21), eingerichtet zum:
- Empfangen der erfassten Oberflächenverformung (17) von der Erfassungseinheit (15);
- Abrufen der Referenzdaten des Referenzregisters (19);
- Bestimmen von jeweiligen Korrelationen zwischen der erfassten Oberflächenverformung (17) und den Oberflächenverformungen der jeweiligen Fluide aus den abgerufenen Referenzdaten; und
- Identifizieren eines Fluids der jeweiligen Fluide der Referenzdaten auf der Grundlage einer maximalen Korrelation zwischen den bestimmten jeweiligen Korrelationen; und
- eine Ausgabeeinheit (23), eingerichtet zum Ausgeben der rheologischen Eigenschaft, die jeweils dem von der Bestimmungseinheit (21) identifizierten Fluid (3) entspricht.

2. Vorrichtung (1, 201) gemäß Anspruch 1, wobei die Rotationseinheit (11) zum Drehen des Rotationsorgans (13) um eine erste Rotationsachse (r) eingerichtet ist, wobei die erste Rotationsachse (r) im Wesentlichen senkrecht, vorzugsweise senkrecht zu einer dem Aufnahmeraum (6) zugewandten Seite der Bodenwand (7), verläuft.

3. Vorrichtung (1, 201) gemäß einem der vorhergehenden Ansprüche, wobei das Rotationsorgan (13) ein scheibenförmiges Element, vorzugsweise ein rundes Element oder ein stabförmiges Element ist.

4. Vorrichtung (1, 201) gemäß einem der vorhergehenden Ansprüche, wobei das Rotationsorgan ein magnetisches Material umfasst und die Rotationseinheit eine Einrichtung zum Bereitstellen eines drehenden Magnetfelds nahe der Bodenwand des Behälters zum Drehen des Rotationsorgans umfasst.

5. Vorrichtung (1, 201) gemäß einem der vorhergehenden Ansprüche, wobei die Erfassungseinheit (15) einen Detektor (27), vorzugsweise einen Lasersensor (27), stärker bevorzugt einen 2D-Oberflächenlasersensor, umfasst.

6. Vorrichtung (1, 201) gemäß einem der vorhergehenden Ansprüche, wobei sich die von dem Referenzregister (19) umfassten Referenzdaten mindestens teilweise beziehen auf:
Oberflächenverformungen jeweiliger Fluide, erfasst durch die Erfassungseinheit (15), und in Bezug auf rheologische Eigenschaften der jeweiligen Fluide, bestimmt durch die Bestimmungseinheit (21); und/oder
Computersimulationen von Oberflächenverformungen jeweiliger Fluide mit bekannten rheologischen Eigenschaften.

7. Vorrichtung (1, 201) gemäß einem der vorhergehenden Ansprüche, wobei die Vorrichtung (1) zum Messen von mindestens einem von einer Viskosität des Fluids (3), einer Oberflächenspannung des Fluids (3), einer Fließspannung des Fluids (3) oder von viskoelastischen Eigenschaften des Fluids (3) eingerichtet ist, wobei das Referenzregister (19) Referenzdaten umfasst, die sich auf mindestens eines von einer Viskosität des Fluids (3), einer Oberflächenspannung des Fluids (3), einer Fließspannung des Fluids (3) und viskoelastischen Eigenschaften des Fluids (3) beziehen.

8. Vorrichtung (1, 201) gemäß einem der vorhergehenden Ansprüche, wobei die Erfassungseinheit (15) ferner zum Erfassen einer zeitabhängigen Oberflächenverformung aufgrund der Drehung des Rotationsorgans (13) eingerichtet ist.

9. Vorrichtung (1, 201) gemäß Anspruch 8, wobei sich die von dem Referenzregister (19) umfassten Referenzdaten mindestens teilweise auf die maximalen Oberflächenverformungen jeweiliger Fluide beziehen und auf bekannte rheologische Eigenschaften der jeweiligen Fluide beziehen, und wobei die Bestimmungseinheit (21) ferner eingerichtet ist zum:
- Bestimmen einer maximalen Oberflächenverformung im Zeitverlauf der zeitabhängigen Oberflächenverformung; und
- Bestimmen von jeweiligen Korrelationen zwischen der erfassten maximalen Oberflächenverformung und den maximalen Oberflächenverformungen der jeweiligen Fluide aus den abgerufenen Referenzdaten, und
wobei vorzugsweise sich die von dem Referenzregister (19) umfassten Referenzdaten mindestens teilweise auf zeitabhängige Oberflächenverformungen jeweiliger Fluide beziehen und auf bekannte rheologische Eigenschaften der jeweiligen Fluide beziehen, und wobei die Bestimmungseinheit (21) ferner eingerichtet ist zum:
- Bestimmen eines Gradienten der zeitabhängigen Oberflächenverformung; und
- Bestimmen von jeweiligen Korrelationen zwischen dem Gradienten der zeitabhängigen Oberflächenverformung und den zeitabhängigen Oberflächenverformungen der jeweiligen Fluide aus den abgerufenen Referenzdaten.

10. Vorrichtung (201) gemäß einem der vorhergehenden Ansprüche, wobei die Vorrichtung (201) ferner umfasst:
- eine Druckeinheit (35), die eingerichtet ist, um eine Menge eines Gases (37), vorzugsweise Luft, mit einem vorbestimmten Druck an eine Oberfläche (29) des Fluids (3) abzugeben (303).

11. Vorrichtung (201) gemäß Anspruch 10, wobei die Erfassungseinheit (15) ferner zum Erfassen (305) einer Oberflächenverformung (17) des Fluids (3) aufgrund des druckbeaufschlagten Gases (37) oder einer Kombination aus Oberflächenverformung (17) des Fluids (3) aufgrund einer Drehung des Rotationsorgans (13) und des druckbeaufschlagten Gases (37) eingerichtet ist, und wobei das Referenzregister (19) ferner Referenzdaten umfasst, die sich auf Oberflächenverformungen jeweiliger Fluide aufgrund von druckbeaufschlagtem Gas bei dem vorbestimmten Druck beziehen und auf bekannte rheologische Eigenschaften der jeweiligen Fluide oder Referenzdaten in Bezug auf Oberflächenverformungen der jeweiligen Fluide aufgrund einer Kombination aus Drehung des Rotationsorgans (13) und des druckbeaufschlagten Gases (37) bei dem vorbestimmten Druck beziehen und sich auf bekannte rheologische Eigenschaften der jeweiligen Fluide beziehen.

12. Verfahren (101, 301) zum Messen einer rheologischen Eigenschaft, wie etwa der Viskosität eines Fluids (3), wie etwa die einer Flüssigkeit, einer Suspension, eines Gels oder einer Aufschlämmung, wobei das Verfahren (101) die folgenden Schritte umfasst:
- Vorsehen (103) eines Behälters (5), der einen Aufnahmeraum (6) umfasst, der zum Halten des Fluids (3) eingerichtet ist, wobei der Behälter (5) mit einer Bodenwand (7) und einer Seitenwand (9) versehen ist;
- Vorsehen (105) einer Rotationseinheit (11), die in der Nähe der Bodenwand (7) des Behälters (5), vorzugsweise am Boden (7) des Behälters (5), vorgesehen ist und mit einem Rotationsorgan (13) versehen ist, wobei das Rotationsorgan (13) zur Drehung in dem Aufnahmeraum (6) relativ zu dem Behälter (5) mit einer vorbestimmten Drehzahl, dem vorbestimmten Drehwinkel und/oder Drehmoment eingerichtet ist, um das Fluid (3) mit einer Rotationskraft zu beaufschlagen;
- Bereitstellen (107) des Fluids (3) in dem Aufnahmeraum (6) derart, dass sich die Rotationseinheit (11) oder mindestens das Rotationsorgan (13) davon unter einem Oberflächenspiegel (29) des Fluids (3) befindet;
- Aufbringen (109), durch die Rotationseinheit (11), der Rotationskraft auf das Fluid (3) durch Drehen des Rotationsorgans (13) mit der vorbestimmten Drehzahl;
- Erfassen (111), durch eine Erfassungseinheit (15), einer Oberflächenverformung (17) des Fluids (3) aufgrund der Drehung des Rotationsorgans (13);
- Vorsehen (113) eines Referenzregisters (19), umfassend Referenzdaten bezogen auf Oberflächenverformungen jeweiliger Fluide, vorzugsweise aufgrund von Drehung des Rotationsorgans (13) mit der vorbestimmten Drehzahl, und bezogen auf bekannte rheologische Eigenschaften der jeweiligen Fluide;
- Empfangen (115), durch eine Bestimmungseinheit (21), der erfassten Oberflächenverformung von der Erfassungseinheit (15);
- Abrufen (117), durch die Bestimmungseinheit (21), der Referenzdaten des Referenzregisters (19);
- Bestimmen (119), durch die Bestimmungseinheit (21), von jeweiligen Korrelationen zwischen der erfassten Oberflächenverformung und den Oberflächenverformungen der jeweiligen Fluide aus den abgerufenen Referenzdaten;
- Identifizieren (121), durch die Bestimmungseinheit (21), eines Fluids der jeweiligen Fluide der Referenzdaten auf der Grundlage einer maximalen Korrelation zwischen den bestimmten jeweiligen Korrelationen; und
- Ausgeben (123), durch eine Ausgabeeinheit (23), der rheologischen Eigenschaft, die jeweils dem durch die Bestimmungseinheit identifizierten Fluid (3) entspricht.

13. Verfahren (101, 301) gemäß Anspruch 12, wobei sich die von dem Referenzregister (19) umfassten Referenzdaten mindestens teilweise auf maximale Oberflächenverformungen jeweiliger Fluide beziehen und sich auf bekannte rheologische Eigenschaften der jeweiligen Fluide beziehen, und wobei das Verfahren (101) ferner die folgenden Schritte umfasst:
- Bestimmen (125), durch die Bestimmungseinheit (21), einer maximalen Oberflächenverformung einer zeitabhängigen Oberflächenverformung; und
- Bestimmen (127), durch die Bestimmungseinheit (21), von jeweiligen Korrelationen zwischen der erfassten maximalen Oberflächenverformung und den maximalen Oberflächenverformungen der jeweiligen Fluide aus den abgerufenen Referenzdaten.

14. Verfahren (101, 301) gemäß Anspruch 12 oder 13, wobei sich die von dem Referenzregister (19) umfassten Referenzdaten mindestens teilweise auf zeitabhängige Oberflächenverformungen jeweiliger Fluide beziehen und sich auf bekannte rheologische Eigenschaften der jeweiligen Fluide beziehen, und wobei das Verfahren (101) ferner die folgenden Schritte umfasst:
- Bestimmen (129), durch die Bestimmungseinheit (21), eines Gradienten der zeitabhängigen Oberflächenverformung; und
- Bestimmen (131), durch die Bestimmungseinheit (21), jeweiliger Korrelationen zwischen dem Gradienten der zeitabhängigen Oberflächenverformung und den zeitabhängigen Oberflächenverformungen der jeweiligen Fluide aus den abgerufenen Referenzdaten.

15. Verfahren (301) gemäß einem der Ansprüche 12 bis 14, wobei das Verfahren (301) ferner den folgenden Schritt umfasst:
- Abgeben (303), durch eine Druckeinheit (35), einer Menge eines Gases (37), vorzugsweise Luft, bei einem vorbestimmten Druck an eine Oberfläche (29) des Fluids (3);
wobei das Referenzregister (15) ferner Referenzdaten umfasst, die sich auf Oberflächenverformungen jeweiliger Fluide aufgrund von druckbeaufschlagtem Gas bei dem vorbestimmten Druck beziehen und sich auf bekannte rheologische Eigenschaften der jeweiligen Fluide oder Referenzdaten in Bezug auf Oberflächenverformungen der jeweiligen Fluide aufgrund einer Kombination aus Drehung des Rotationsorgans (13) und des druckbeaufschlagten Gases (37) bei dem vorbestimmten Druck beziehen und sich auf bekannte rheologische Eigenschaften der jeweiligen Fluide beziehen;
wobei während des Schritts des Erfassens (305) durch die Erfassungseinheit (15) eine Oberflächenverformung (17) des Fluids aufgrund des druckbeaufschlagten Gases (37) oder aufgrund einer Kombination der Drehung des Rotationsorgans (13) und des druckbeaufschlagten Gases (37) erfasst wird.

## Revendications

1. Appareil (1, 201) agencé pour mesurer une propriété rhéologique telle que la viscosité d'un fluide (3) tel qu'un liquide, une suspension, un gel ou une bouillie, de préférence pour mesurer une pluralité des propriétés rhéologiques et une tension superficielle du fluide (3), l'appareil (1) comprenant :
- un récipient (5) comprenant un espace de réception (6) agencé pour contenir le fluide (3), dans lequel le récipient (5) est doté d'une paroi de fond (7) et d'une paroi latérale (9) ;
- une unité de rotation (11) prévue à proximité de la paroi de fond (7) du récipient (5), de préférence au niveau du fond (7) du récipient (5), et dotée d'un organe de rotation (13), dans lequel l'organe de rotation (13) est agencé pour tourner dans l'espace de réception (6) par rapport au récipient (5) à une vitesse de rotation prédéterminée, à un angle de rotation et/ou à un couple prédéterminé pour fournir une force de rotation au fluide (3) ;
- une unité de détection (15) agencée pour détecter une déformation de surface (17) du fluide (3), due à la rotation de l'organe de rotation (13) ;
- un registre de référence (19) comprenant des données de référence liées à des déformations de surface de fluides respectifs, de préférence dues à la rotation de l'organe de rotation (13) à la vitesse de rotation prédéterminée, à l'angle de rotation et/ou au couple prédéterminé, et liées à des propriétés rhéologiques connues des fluides respectifs ;
- une unité de détermination (21) agencée pour :
- recevoir la déformation de surface détectée (17) à partir de l'unité de détection (15) ;
- consulter les données de référence du registre de référence (19) ;
- déterminer des corrélations respectives entre la déformation de surface détectée (17) et les déformations de surface des fluides respectifs à partir des données de référence consultées ; et
- identifier un fluide des fluides respectifs des données de référence sur la base d'une corrélation maximale entre les corrélations respectives déterminées ; et
- une unité de sortie (23) agencée pour délivrer en sortie la propriété rhéologique correspondant respectivement au fluide (3) identifié par l'unité de détermination (21).

2. Appareil (1, 201) selon la revendication 1, dans lequel l'unité de rotation (11) est agencée pour faire tourner l'organe de rotation (13) autour d'un premier axe de rotation (r), dans lequel le premier axe de rotation (r) est sensiblement perpendiculaire, de préférence perpendiculaire à un côté de la paroi de fond (7) faisant face à l'espace de réception (6).

3. Appareil (1, 201) selon l'une quelconque des revendications précédentes, dans lequel l'organe de rotation (13) est un élément à forme de disque, de préférence un élément rond ou un élément en forme de tige.

4. Appareil (1, 201) selon l'une quelconque des revendications précédentes, dans lequel l'organe de rotation comprend un matériau magnétique et l'unité de rotation comprend un dispositif pour fournir un champ magnétique rotatif à proximité de la paroi de fond du récipient pour faire tourner l'organe de rotation.

5. Appareil (1, 201) selon l'une quelconque des revendications précédentes, dans lequel l'unité de détection (15) comprend un détecteur (27), de préférence un capteur laser (27), idéalement un capteur laser de surface 2D.

6. Appareil (1, 201) selon l'une quelconque des revendications précédentes, dans lequel les données de référence, comprises par le registre de référence (19), sont au moins en partie liées à :
des déformations de surface de fluides respectifs, détectées par l'unité de détection (15) et liées à des propriétés rhéologiques des fluides respectifs, déterminées par l'unité de détermination (21) ; et/ou
des simulations informatiques de déformations de surface de fluides respectifs présentant des propriétés rhéologiques connues.

7. Appareil (1, 201) selon l'une quelconque des revendications précédentes, dans lequel l'appareil (1) est agencé pour mesurer au moins l'une d'une viscosité du fluide (3), d'une tension superficielle du fluide (3), d'une limite élastique du fluide (3) ou de propriétés de viscoélasticité du fluide (3), dans lequel le registre de référence (19) comprend des données de référence liées à au moins l'une d'une viscosité du fluide (3), d'une tension superficielle du fluide (3), d'une limite élastique du fluide (3) et de propriétés de viscoélasticité du fluide (3).

8. Appareil (1, 201) selon l'une quelconque des revendications précédentes, dans lequel l'unité de détection (15) est en outre agencée pour détecter une déformation de surface dépendante du temps, due à la rotation de l'organe de rotation (13).

9. Appareil (1, 201) selon la revendication 8, dans lequel les données de référence, comprises par le registre de référence (19), sont au moins en partie liées à des déformations de surface maximales de fluides respectifs et liées à des propriétés rhéologiques connues des fluides respectifs et dans lequel l'unité de détermination (21) est en outre agencée pour :
- déterminer une déformation de surface maximale au fil du temps de la déformation de surface dépendante du temps ; et
- déterminer des corrélations respectives entre la déformation de surface maximale détectée et les déformations de surface maximales des fluides respectifs à partir des données de référence consultées, et
de préférence, dans lequel les données de référence, comprises par le registre de référence (19), sont au moins en partie liées à des déformations de surface dépendantes du temps de fluides respectifs et liées à des propriétés rhéologiques connues des fluides respectifs et dans lequel l'unité de détermination (21) est en outre agencée pour :
- déterminer un gradient de la déformation de surface dépendante du temps ; et
- déterminer des corrélations respectives entre le gradient de la déformation de surface dépendante du temps et les déformations de surface dépendantes du temps des fluides respectifs à partir des données de référence consultées.

10. Appareil (201) selon l'une quelconque des revendications précédentes, dans lequel l'appareil (201) comprend en outre :
- une unité de pression (35) agencée pour fournir (303) une quantité d'un gaz (37), de préférence de l'air, à une pression prédéterminée à une surface (29) du fluide (3).

11. Appareil (201) selon la revendication 10, dans lequel l'unité de détection (15) est en outre agencée pour détecter (305) une déformation de surface (17) du fluide (3), due au gaz sous pression (37) ou une combinaison de déformation de surface (17) du fluide (3), due à la rotation de l'organe de rotation (13) et du gaz sous pression (37) et dans lequel le registre de référence (19) comprend en outre des données de référence liées à des déformations de surface de fluides respectifs dues au gaz sous pression à la pression prédéterminée et liées à des propriétés rhéologiques connues des fluides respectifs, ou des données de référence liées à des déformations de surface de fluides respectifs dues à une combinaison de rotation de l'organe de rotation (13) et du gaz sous pression (37) à la pression prédéterminée et liées à des propriétés rhéologiques connues des fluides respectifs.

12. Procédé (101, 301) de mesure d'une propriété rhéologique telle que la viscosité d'un fluide (3) tel qu'un liquide, une suspension, un gel ou une bouillie, le procédé (101) comprenant les étapes de :
- fourniture (103) d'un récipient (5) comprenant un espace de réception (6) agencé pour contenir le fluide (3), dans lequel le récipient (5) est doté d'une paroi de fond (7) et d'une paroi latérale (9) ;
- fourniture (105) d'une unité de rotation (11) prévue à proximité de la paroi de fond (7) du récipient (5), de préférence au niveau du fond (7) du récipient (5) et dotée d'un organe de rotation (13), dans lequel l'organe de rotation (13) est agencé pour tourner dans l'espace de réception (6) par rapport au récipient (5) à une vitesse de rotation prédéterminée, à l'angle de rotation et/ou à un couple prédéterminé pour fournir une force de rotation au fluide (3) ;
- fourniture (107) du fluide (3) dans l'espace de réception (6) de sorte que l'unité de rotation (11), ou au moins l'organe de rotation (13) de celle-ci, soit en dessous d'un niveau de surface (29) du fluide (3) ;
- fourniture (109), par l'unité de rotation (11), de la force de rotation au fluide (3) en faisant tourner l'organe de rotation (13) à la vitesse prédéterminée ;
- détection (111), par une unité de détection (15), d'une déformation de surface (17) du fluide (3), due à la rotation de l'organe de rotation (13) ;
- fourniture (113), d'un registre de référence (19) comprenant des données de référence liées à des déformations de surface de fluides respectifs, de préférence dues à la rotation de l'organe de rotation (13) à la vitesse prédéterminée et liées à des propriétés rhéologiques connues des fluides respectifs ;
- réception (115), par une unité de détermination (21), de la déformation de surface détectée à partir de l'unité de détection (15) ;
- consultation (117), par l'unité de détermination (21), des données de référence du registre de référence (19) ;
- détermination (119), par l'unité de détermination (21), de corrélations respectives entre la déformation de surface détectée et les déformations de surface des fluides respectifs à partir des données de référence consultées ;
- identification (121), par l'unité de détermination (21), d'un fluide des fluides respectifs des données de référence sur la base d'une corrélation maximale entre les corrélations respectives déterminées ; et
- délivrance en sortie (123), par une unité de sortie (23), de la propriété rhéologique correspondant respectivement au fluide (3) identifié par l'unité de détermination.

13. Procédé (101, 301) selon la revendication 12, dans lequel les données de référence, comprises par le registre de référence (19), sont au moins en partie liées à des déformations de surface maximales de fluides respectifs et liées à des propriétés rhéologiques connues des fluides respectifs et dans lequel le procédé (101) comprend en outre les étapes de :
- détermination (125), par l'unité de détermination (21), d'une déformation de surface maximale d'une déformation de surface dépendante du temps ; et
- détermination (127), par l'unité de détermination (21), de corrélations respectives entre la déformation de surface maximale détectée et les déformations de surface maximales des fluides respectifs à partir des données de référence consultées.

14. Procédé (101, 301) selon la revendication 12 ou 13, dans lequel les données de référence, comprises par le registre de référence (19), sont au moins en partie liées à des déformations de surface dépendantes du temps de fluides respectifs et liées à des propriétés rhéologiques connues des fluides respectifs et dans lequel le procédé (101) comprend en outre les étapes de :
- détermination (129), par l'unité de détermination (21), d'un gradient de la déformation de surface dépendante du temps ; et
- détermination (131), par l'unité de détermination (21), de corrélations respectives entre le gradient de la déformation de surface dépendante du temps et les déformations de surface dépendantes du temps des fluides respectifs à partir des données de référence consultées.

15. Procédé (301) selon l'une quelconque des revendications 12 à 14, dans lequel le procédé (301) comprend en outre l'étape de :
- fourniture (303), par une unité de pression (35), d'une quantité d'un gaz (37), de préférence de l'air, à une pression prédéterminée à une surface (29) du fluide (3) ;
dans lequel le registre de référence (15) comprend en outre des données de référence liées à des déformations de surface de fluides respectifs dues à du gaz sous pression à la pression prédéterminée et liées à des propriétés rhéologiques connues des fluides respectifs, ou des données de référence liées à des déformations de surface de fluides respectifs dues à une combinaison de rotation de l'organe de rotation (13) et du gaz sous pression (37) à la pression prédéterminée et liées à des propriétés rhéologiques connues des fluides respectifs ;
dans lequel, au cours de l'étape de détection (305) par l'unité de détection (15), une déformation de surface (17) du fluide, due au gaz sous pression (37) ou due à une combinaison de la rotation de l'organe de rotation (13) et du gaz sous pression (37), est détectée.
